# EUROPÄISCHE PATENTSCHRIFT

(11) **EP 1 724 730 B1**
(45) Veröffentlichungstag und Bekanntmachung des Hinweises auf die Patenterteilung: **28.05.2008**
(21) Anmeldenummer: 06113486.2
(22) Anmeldetag: 04.05.2006
(51) Int. Cl.: G07C 3/00, A01D 41/127

(54) **Überwachungseinrichtung und ein Verfahren zur Überwachung der Funktion der Komponenten einer landwirtschaftlichen Arbeitsmaschine**
Device and process to monitor the function of components of an agricultural working machine
Dispositif et procédé de surveillance de la fonction des constituantes d'une machine de travail agricole

(30) Priorität: 20.05.2005 DE 102005023256
(43) Veröffentlichungstag der Anmeldung: 22.11.2006
(73) Patentinhaber: Deere & Company, Moline, IL 61265-8098 (US)
(72) Erfinder: Beck, Folker Dr., 66506 Maßweiler (DE); Bischoff, Lutz, 66989 Nünschweiler (DE)
(74) Vertreter: Holst, Sönke

(56) Entgegenhaltungen:
- EP-A- 1 504 649
- EP-A- 1 564 688
- DE-A1- 10 100 522
- DE-A1- 10 324 859

## Beschreibung

Die Erfindung betrifft eine Überwachungseinrichtung und ein Verfahren zur Überwachung der Funktion der Komponenten einer landwirtschaftlichen Arbeitsmaschine nach den Oberbegriffen der Ansprüche 1 und 9.

### Stand der Technik

Eine Überwachungseinrichtung ist in der DE 101 00 522 A beschrieben. Die Arbeitsmaschine ist mit mehreren Sensoren zur Erfassung von Vibrationen ausgestattet, die ihre Komponenten während des Betriebs erzeugen. Weiterhin können Drehzahlen einzelner Komponenten erfasst werden. Die Amplituden und Frequenzen der erfassten Vibrationen werden durch eine Rechnereinrichtung anhand der gemessenen Drehzahlen einzelnen Komponenten der Maschine zugeordnet und mit zugeordneten Vergleichswerten verglichen. Alternativ werden die Vibrationen den Komponenten anhand ihrer bereits bekannten Drehzahlen zugeordnet. Die Überwachungseinrichtung ermöglicht eine Erkennung fehlerhafter Komponenten anhand des sich aufgrund des Fehlers ändernden Vibrationsspektrums.

Die Komponenten landwirtschaftlicher Arbeitsmaschinen, insbesondere von Erntemaschinen, verursachen jedoch Vibrationen, die nicht nur von ihrer Drehzahl und ihrem Zustand abhängen, sondern auch davon, ob sie sich gerade im Eingriff mit Erntegut oder anderer, zu bearbeitender Materie befinden oder nicht, beispielsweise bei der Bodenbearbeitung oder beim Ausstreuen bzw. Ausbringen von Düngermaterial, Saatgut oder Chemikalien. Dieser Sachverhalt ist bei der Auswertung der Vibrationsspektren zu berücksichtigen. In der DE 101 00 522 A wird dazu vorgeschlagen, das Geräuschspektrum nur gelegentlich, zum Beispiel beim Wenden am Ende eines Felds zu analysieren. Man bekommt dann allerdings nur Informationen über relativ kurze Zeiträume, die wegen der kurzen Messzeit und der dadurch bedingten Unschärfe der in den Frequenzraum Fourier-transformierten Werte nicht immer zur hinreichend fehlersicheren Identifikation von schadhaften Komponenten ausreichen.

In der DE 39 07 419 A wird ein Verfahren zur akustischen Erfassung von Schäden an einer Maschine beschrieben, bei dem die Schallwellen nur bei vorgegebenen Betriebsbedingungen, wie Drehzahl, Belastung und Temperatur erfasst und mit vorgegebenen Grenzwerten verglichen werden. Auch hier werden - abhängig von der Wahl der vorgegebenen Betriebsbedingungen - nur geringe Datenmengen erfasst.

Die als gattungsbildend angesehene EP 1 504 649 A beschreibt ein Verfahren zur Überwachung der Funktion einer Arbeitsmaschine, bei der Schwingungen von Aggregaten der Arbeitsmaschine erfasst werden. Außerdem werden die Drehzahlen der Aggregate erfasst. Anschließend werden die Schwingungen mittels ordnungsabhängiger Ordnungsfilter gefiltert und die so aufbereiteten Signale werden mit verschiedenen, abgelegten Schwellwerten verglichen.

### Aufgabe der Erfindung

Die der Erfindung zu Grunde liegende Aufgabe wird darin gesehen, eine Überwachungseinrichtung und ein Verfahren zur Überwachung für eine landwirtschaftliche Arbeitsmaschine bereitzustellen, die das Erfassen einer Datenmenge ermöglichen, die eine sichere Erkennung eines möglichen Fehlers erlaubt.

Diese Aufgabe wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Die Überwachungseinrichtung umfasst eine Rechnereinrichtung, der Signalwerte von einem Vibrationssensor und Signale von einem Betriebszustandssensor zugeführt werden. Die Signalwerte des Vibrationssensors enthalten eine Information über mechanische Vibrationen, die von beweglichen Komponenten der Arbeitsmaschine verursacht werden. Das Signal von der Betriebszustandserfassungseinrichtung enthält eine Information über den aktuellen Betriebszustand von Komponenten der Arbeitsmaschine. Die Betriebszustände können kontinuierliche Zahlenwerte (z. B. Drehzahlen oder Drehzahlbereiche oder Temperaturen) annehmen oder auch binäre Angaben sein, insbesondere, ob die Komponenten eingeschaltet sind oder nicht. Die Betriebszustände können auch anhand der Vibrationssignale geschätzt oder bestimmt werden. Es wird vorgeschlagen, dass die Rechnereinrichtung die Signalwerte des Vibrationssensors anhand des zugehörigen, d. h. gleichzeitig aufgenommenen, Signals der Betriebszustandserfassungseinrichtung in verschiedene Klassen einteilt (d. h. klassifiziert), die unterschiedlichen Konstellationen der Betriebszustände von Komponenten entsprechen. Die in die Klassen eingeteilten Signalwerte oder daraus abgeleitete Daten werden zur Erzeugung der Zustandsinformation hinsichtlich des Zustands der Komponenten mit Vergleichswerten verglichen, um im Falle eines Fehlers ein entsprechendes Warnsignal abgeben zu können. Aus den Signalwerten des Vibrationssensors abgeleitete Daten können in den Frequenzraum Fourier-transformierte Spektren sein, oder daraus abgeleitete Informationen, oder im Zeit- oder Frequenzraum z. B. nach dem MPEG-Standard komprimierte Signalwerte. Die Auswertung kann im Frequenzraum erfolgen, oder im Zeitraum. Beispielsweise ergibt der einfache Signalpegel schon das erste Diagnosesignal. Die Rechnereinrichtung speichert die Signalwerte zur späteren Auswertung nur dann ab, wenn die Signale der Betriebszustandserfassungseinrichtung anzeigen, dass die Betriebsbedingungen in eine auswertbare Klasse fallen.

Auf diese Weise werden die Signalwerte des Vibrationssensors bei unterschiedlichen, definierten Betriebsbedingungen und somit über hinreichend lange Zeiträume erfasst. Bei der Auswertung der Signalwerte werden die - die jeweils bei der Erfassung der Vibrationssignale geltenden Betriebsbedingungen repräsentierenden - Klassen berücksichtigt. Die Betriebsbedingungen werden demnach in eine Reihe von geeigneten Klassen zusammengefasst, für die die Signalwerte nach einer hinreichenden Messzeit reproduzierbare Kenngrößen, wie Frequenzen und Amplituden, mit geringen Störeinflüssen liefern. Die Klassen werden derart definiert, dass die Komponenten gut diagnostiziert werden können. Die Erfindung eignet sich für beliebige Arten (insbesondere landwirtschaftlicher) Arbeitsmaschinen, beispielsweise Erntemaschinen (Mähdrescher, Feldhäcksler, Mähmaschinen, Baumwollpflücker einschließlich Erntevorsätze), Maschinen zur Bodenbearbeitung und zum Materialverteilen (Dünger, Saatgut, Chemikalien).

Die in Klassen eingeteilten Signalwerte können zur Erzeugung der Zustandsinformation klassenweise oder klassenübergreifend mit Vergleichswerten verglichen werden. Letzteres bedeutet, dass die Zustandsinformation anhand von Signalen des Vibrationssensors erzeugt wird, die bei unterschiedlichen Betriebszuständen einer Komponente und/oder unterschiedlichen Kombinationen der Betriebszustände mehrerer Komponenten erfasst werden und/oder wurden. Ein klassenübergreifender Vergleich ist insbesondere dann sinnvoll, wenn die betreffende, zu untersuchende Komponente sich in beiden Klassen im Betrieb befindet. Hingegen ist in der Regel ein Vergleich mit Vergleichswerten für nicht im Betrieb befindliche Komponenten nur in Ausnahmefällen sinnvoll, beispielsweise dann, wenn defekte oder intakte Komponenten auch außerhalb ihres Betriebes charakteristische Vibrationen abgeben.

Der Betriebszustand einer Komponente kann durch die Betriebszustandserfassungseinrichtung bei zumindest näherungsweise bekannter Bewegungsfrequenz und/oder Amplitude anhand des Signals des Vibrationssensors bestimmt werden. Die dann auch als Betriebszustandserfassungseinrichtung dienende Rechnereinrichtung ermittelt anhand der Frequenz und/oder Amplitude eines Signalanteils dessen Quelle, und ordnet diesen Signalanteil der jeweiligen Komponente zu. Sollten schwieriger erfassbare Betriebszustände klassifiziert werden, für die (z. B. aus Kostengründen) keine Sensoren bereit stehen, können moderne Verfahren der Mathematik und Regelungstechnik, wie beispielsweise neuronale Netze, Fuzzylogik oder Beobachter verwendet werden, um Betriebszustände abzuschätzen.

Wenn beispielsweise bei einem Mähdrescher ein Strohhäcksler vorhanden wäre, könnte sein Betriebszustand anhand des Drehzahlverhaltens des Antriebsmotors beim Zuschalten des Dreschwerks erkannt werden. Die Motordrehzahl bricht stärker ein, wenn der Strohhäcksler mit seinem Trägheitsmoment beschleunigt werden muss. Die Höhe des Drehzahleinbruchs hängt aber nicht nur vom Kupplungszustand des Strohhäckslers ab, sondern auch von der Solldrehzahl, d. h. dem Antriebsverhältnis im Antrieb der Dreschtrommel und eventuellen Veränderungen (z. B. Maisplatten) an der Dreschtrommmel. Der Betriebszustand des Strohhäckslers lässt sich auch anhand der ausgewerteten Schwingungsparameter bestimmen, z. B. anhand der Amplitude im Spektrum eines Vibrationssensors. Überschreitet die Schwingungsamplitude bei der Häckslerfrequenz einen definierten Schwellenwert, so ist davon auszugehen, dass der Strohhäcksler zugeschaltet ist. Somit lässt sich aus den Schwingungsparametern selbst erkennen, ob der Antriebsstrang des Strohhäckslers unter Last ist.

Eine derartige Zuordnung einer Schwingung zu einem beweglichen Element ist hingegen dann problematisch, wenn mehrere Komponenten näherungsweise ähnliche Drehzahlen und/oder Bewegungsamplituden aufweisen. In einem solchen Fall bietet es sich an, der Komponente einen Drehzahlsensor zuzuordnen, der die (Dreh-) Frequenz des Elements erfasst. Derartige Drehzahlsensoren werden in modernen Arbeitsmaschinen bei wichtigeren Bauteilen standardmäßig elektronisch gemessen. Vom Datenbus kann daher schon ein Teil der benötigten Informationen gelesen werden. Davon ausgehend sind über die bekannten Übersetzungsverhältnisse im gesamten Antriebssystem die Drehzahlen oder Bewegungsfrequenzen aller vorhergehenden und folgenden beweglichen Baugruppen bekannt. Bei der Berechnung kann der Schlupf mit berechnet werden. Wenn notwendig, können oder müssen zusätzliche Drehzahlsensoren installiert werden. Das Signal des Drehzahlsensors wird der Rechnereinrichtung zugeführt, die der Komponente die Signalanteile des Vibrationssensors zuordnet, die mit der vom Drehzahlsensor gemessenen Drehfrequenz korrelieren.

Um Signalwerte vom Vibrationssensor zu bekommen, die von der Rechnereinrichtung auf reproduzierbare Weise in eine Zustandsinformation umgesetzt werden können, ist es in der Regel sinnvoll, dass die Drehzahl bestimmter, die hauptsächlichen Vibrationen verursachender Komponenten der Arbeitsmaschine bei der Aufnahme der Signalwerte innerhalb eines vorbestimmten Toleranzbereichs liegt, z. B. innerhalb von +/- 5% von einem Drehzahlsollwert. Es bietet sich daher an, der Rechnereinrichtung eine geeignete Information über die Drehzahl einer relevanten Komponente der Arbeitsmaschine zuzuführen, beispielsweise eines Verbrennungsmotors für den Antrieb der Komponenten der Arbeitsmaschine oder eine mit veränderbarer Drehzahl antreibbarer Erntegutbearbeitungseinrichtung, z. B. eine Dreschtrommel oder eine Axialtrenneinrichtung. Die Rechnereinrichtung zieht über eine Messperiode erfasste Signalwerte des Vibrationssensors nur dann zur Erzeugung der Zustandsinformation heran, wenn die Drehzahl über die ganze Messperiode innerhalb des vorbestimmten Toleranzbereichs lag. Signalwerte, die bei außerhalb des Toleranzbereichs liegenden Drehzahlen erfasst wurden, werden nicht berücksichtigt, bzw. gar nicht zur späteren Auswertung abgespeichert. Anzumerken ist, dass in einer anderen Ausführungsform eine Einbeziehung der Drehzahl der Komponenten in die Signalwerte, beispielsweise in Form einer zeitlichen Normierung der Signalwerte auf einen Drehzahlsollwert, möglich wäre, um auch bei unterschiedlichen Drehzahlen aufgenommene Signalwerte berücksichtigen zu können.

Die Signalwerte des Vibrationssensors werden, wie bereits erwähnt, im Zeitraum aufgenommen und vorzugsweise im Frequenzraum ausgewertet, d. h. mit Sollwerten verglichen. Die zur Transformation der Signalwerte aus dem Zeitraum in den Frequenzraum dienende Fouriertransformation erfordert, insbesondere bei relativ niedrigen Drehzahlen, eine hinreichend lange, zusammenhängende Messperiode. So liegt die Drehzahl (Bewegungsfrequenz) von Strohschüttlern eines Mähdreschers bei etwa 3 Hz, was eine Messzeit in der Größenordnung einiger 10 s sinnvoll macht. Es bietet sich daher an, nur Signalwerte des Vibrationssensors zu berücksichtigen, bzw. zur späteren Auswertung abzuspeichern, die in eine Messperiode fallen, die länger als ein bestimmter Schwellenwert war.

Falls die Arbeitsmaschine nur relativ selten durch einen Bediener oder eine automatische Steuerung in einen Betriebszustand gebracht wird, der in eine durch die Rechnereinrichtung auswertbare Klasse fällt, fallen nur relativ wenig auswertbare Daten an, so dass die Erkennung eines Fehlers schwer oder unmöglich wird. Um dennoch eine Fehleranalyse zu ermöglichen, kann die Rechnereinrichtung selbsttätig die Komponenten über einen hinreichenden Zeitraum in einen definierten Betriebszustand bringen, in dem eine Auswertung der Signalwerte möglich ist. Alternativ oder zusätzlich kann sie einem Bediener eine Anweisung geben, Komponenten in diesen definierten Betriebszustand zu bringen. Es könnte beispielsweise (manuell oder automatisch) ein gesteuerter Hochlauf der Maschine getestet werden, indem die Motordrehzahl kontinuierlich von Leerlauf auf Hochleerlaufdrehzahl gesteuert wird. Diese Methode hat den Vorteil, dass Schäden besser erkannt werden können, die außerhalb der Nenndrehzahl Resonanzen verursachen. Ähnlich könnte man auch den Auslauf diagnostizieren: Bei Hochleerlaufdrehzahl wird das Dreschwerk (oder ein anderes angetriebenes Element) ausgerückt. Durch die Trägheit der Arbeitselemente läuft es noch eine Weile nach. Das Auslaufverhalten (Auslaufzeit und Änderungen in den Spektren) kann zur Diagnose genutzt werden.

### Ausführungsbeispiel

In den Zeichnungen ist ein nachfolgend näher beschriebenes Ausführungsbeispiel der Erfindung dargestellt. Es zeigt:
- Fig. 1: eine halbschematische Seitenansicht eines landwirtschaftlichen Axialmähdreschers,
- Fig. 2: ein Flussdiagram der Überwachungseinrichtung des Mähdreschers,

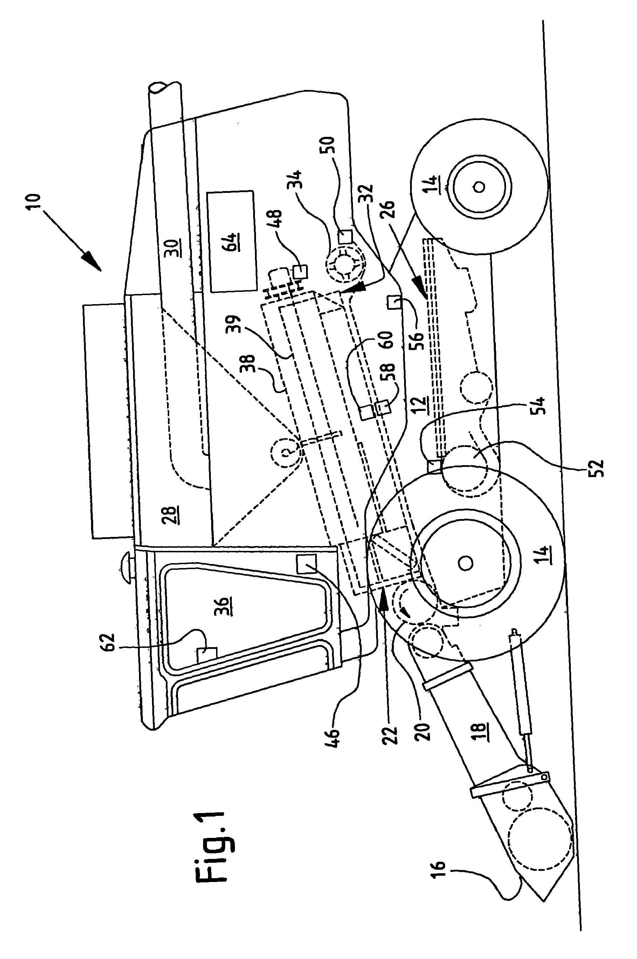

Die Figur 1 zeigt eine landwirtschaftliche Arbeitsmaschine 10 in Form eines Mähdreschers mit einem Fahrgestell 12 und sich von diesem erstreckenden Bodenlaufrädern 14, an dessen Beispiel die Erfindung erläutert wird. Eine Erntegutbergungsvorrichtung 16 in Form eines Schneidwerks wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung weiter. Die Axialtrennvorrichtung umfasst ein zylindrisches Rotorgehäuse 38 und einen im Rotorgehäuse 38 angeordneten Rotor 39.

Die Axialtrennvorrichtung drischt und trennt das geerntete Gut. Korn und Spreu fallen durch Roste am Boden der Axialtrennvorrichtung in ein Reinigungssystem 26. Das Reinigungssystem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 in einen Anhänger oder Lastwagen entladen werden. Gedroschenes, vom Korn befreites Stroh wird aus der Axialtrennvorrichtung durch einen Auslass 32 heraus zu einer Abgabetrommel 34 geführt. Die Abgabetrommel 34 wirft das Stroh am rückwärtigen Ende der Arbeitsmaschine 10 aus.

Die Bedienung der Arbeitsmaschine 10 erfolgt von einer Fahrerkabine 36 aus. Die antreibbaren Komponenten der Arbeitsmaschine 10 werden durch einen Verbrennungsmotor 64 angetrieben. In der Fahrerkabine 36 ist auch eine Rechnereinrichtung 46 angeordnet, die mit verschiedenen Sensoren verbunden ist:

Ein Vibrationssensor 48 ist an der Axialtrennvorrichtung angebracht und erfasst Schwingungen des Rotorgehäuses 38. In der Nähe der Abgabetrommel 34 ist am Fahrgestell 12 ein Vibrationssensor 50 befestigt, der von der Abgabetrommel 34 verursachte Schwingungen der sie tragenden Teile des Fahrgestells 12 erfasst. In der Nähe eines Ventilators 52 der Reinigungseinrichtung ist am Fahrgestell 12 ein Vibrationssensor 54 angeordnet. Ein Drehzahlsensor 58 erfasst die Drehzahl des Rotors 39 induktiv durch einen am Rotor 39 angebrachten Permanentmagneten 60. Ein Vibrationssensor 56 ist oberhalb des Reinigungssystems 26 am Fahrgestell 12 angebracht. Die Vibrationssensoren 48, 50, 54 und 56 sind an sich bekannte Sensoren, die zur Erzeugung von Signalen eingerichtet sind, die eine Information über die von den Vibrationssensoren 48, 50, 54 und 56 aufgenommenen Schallwellen enthalten. Es kann sich insbesondere um akustische oder BeschleunigungsSensoren handeln.

Der Vibrationssensor 48 stellt aufgrund seiner Lage primär (hauptsächlich) eine Information über die Bewegung des Rotorgehäuses 38 und somit durch vom drehenden Rotor 39 verursachte Schwingungen bereit. Analog stellt der Vibrationssensor 50 primär eine Information über von der Abgabetrommel 34 verursachte Schwingungen des Fahrgestells 12 bereit. Der Vibrationssensor 54 stellt primär Informationen über die vom Ventilator 52 verursachten Vibrationen bereit. Der Vibrationssensor 56 stellt eine Information über die Vibrationen des Fahrgestells bereit, die von allen beweglichen Elementen der Arbeitsmaschine 10 verursacht werden.

Die Vibrationssensoren 48, 50, 54, 56 und 58 sind elektrisch (oder optisch), vorzugsweise über eine Busleitung, mit der Rechnereinrichtung 46 verbunden. Die Rechnereinrichtung 46 digitalisiert die analogen Signale der Vibrationssensoren, wertet sie aus und gibt dem Bediener in der Fahrerkabine 36 auf einer Anzeigeeinrichtung 62 eine Fehlermeldung, wenn aus den Signalen ein Fehler der Arbeitsmaschine 10 erkennbar ist.

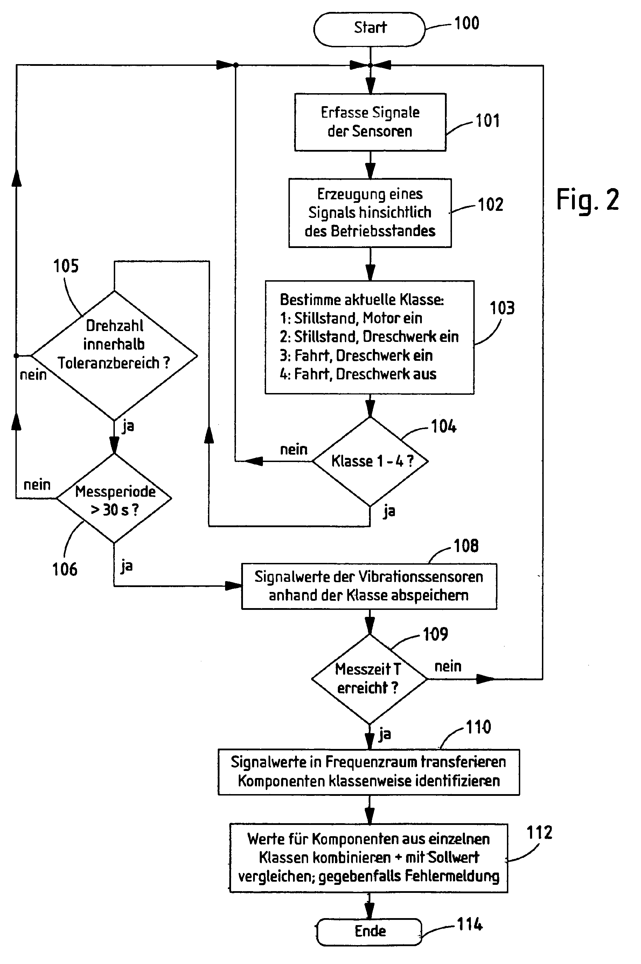

Eine mögliche Arbeitsweise der Rechnereinrichtung 46 ist in der Figur 2 dargestellt. Nach dem Start in Schritt 100 werden im Schritt 101 die Signale der Vibrationssensoren 48, 50, 54, 56 und des Drehzahlsensors 58 über eine bestimmte Zeit aufgenommen, beispielsweise über 10 Sekunden. Dabei wird der Spannungsverlauf der von den Vibrationssensoren 48, 50, 54, 56 und dem Drehzahlsensor 58 gelieferten Signale von der Rechnereinrichtung 46 als Funktion der Zeit abgespeichert.

Im folgenden Schritt 102 wird durch die Rechnereinrichtung 46 ein Signal hinsichtlich des Betriebszustands der Komponenten der Arbeitsmaschine 10 anhand des Signals des Drehzahlsensors 58 und der Vibrationssensoren 48, 50, 54 und 56 erzeugt. Anhand des Drehzahlsensors 58 ist erkennbar, ob sich der Rotor 39 dreht oder nicht. Der Vibrationssensor 56 liefert unterschiedliche Signale, wenn der Antriebsmotor 64 sich im Betrieb befindet, als wenn er ausgeschaltet ist, da die vom Antriebsmotor 64 verursachten Vibrationen über das Fahrgestell 12 auf ihn übertragen werden. Der Betriebszustand des Antriebsmotors 62 kann somit anhand der Signale des Vibrationssensors 56 erkannt werden. Während einer Fahrt erzeugen die zum Antrieb der angetriebenen Räder 14 dienenden Hydraulikmotore ebenfalls spezifische Vibrationen, die vom Vibrationssensor 56 erfasst werden. Alternativ wird die aktuelle Vortriebsgeschwindigkeit durch einen geeigneten Sensor erfasst, der die Drehzahl eines Rads 14 oder mit Radar oder einer GPS-Antenne die Geschwindigkeit gegenüber dem Boden misst. Anhand des Signals des Vibrationssensors 50 kann erkannt werden, ob die Abgabetrommel 34 Erntegut fördert. Demnach kann die - hier als Teil einer Betriebszustandserfassungseinrichtung agierende - Rechnereinrichtung 46 im Schritt 104 ein Signal hinsichtlich des Betriebszustands mehrerer Komponenten der Arbeitsmaschine 10 liefern. Sie stellt ein Signal bereit, das unter anderem eine Information darüber enthält, ob der Antriebsmotor 64 läuft, ob die Arbeitsmaschine 10 fährt oder stillsteht, ob das Dreschwerk mit dem Rotor 39 sich im Betrieb befindet, und ob Erntegut die Arbeitsmaschine 10 durchläuft.

Anhand dieses Signals bestimmt die Rechnereinrichtung 46 im folgenden Schritt 104 eine jeweils geltende Klasse des Betriebszustands der Komponenten. In der dargestellten Ausführungsform wird zwischen vier Klassen unterschieden:
1: Die Arbeitsmaschine 10 steht still, der Antriebsmotor 64 befindet sich im Betrieb.
2: Die Arbeitsmaschine 10 steht still, das Dreschwerk ist eingeschaltet.
3. Die Arbeitsmaschine 10 fährt, das Dreschwerk ist eingeschaltet, aber es liegt kein Erntegutdurchsatz vor.
4. Die Arbeitsmaschine 10 fährt, das Dreschwerk ist ausgeschaltet.

Es wäre auch denkbar, weitere Klassen einzuführen. Es ist hervorzuheben, dass keine Klasse für eine mit Erntegut beaufschlagte Arbeitsmaschine 10 vorliegt. Der Grund dafür ist, dass Erntegut die Schwingungen der Komponenten dämpft und eine Erkennung von Fehlern erschwert. In einer anderen Ausführungsform könnte jedoch auch einem Erntevorgang eine Klasse zugeordnet werden.

Falls im folgenden Schritt 104 der Betriebszustand keiner der Klassen entspricht, wird kein Signalwert abgespeichert, sondern mit Schritt 101 fortgefahren. Es folgt anderenfalls der Schritt 105, in dem abgefragt wird, ob die Drehzahl des Verbrennungsmotors 64 und der Axialtrenneinrichtung während der gesamten bisherigen Messzeit innerhalb geeigneter Toleranzbereiche lag. Die Drehzahlen werden der Rechnereinrichtung 46 vom Drehzahlsensor 48 für die Axialtrenneinrichtung und vom Vibrationssensor 56 für den Verbrennungsmotor 64 (oder von dessen Motorsteuerung) bereitgestellt. Ist das Ergebnis von Schritt 105 negativ, folgt wieder der Schritt 101, in der die Messung von vorn beginnt, anderenfalls folgt der Schritt 106.

Im Schritt 106 wird abgefragt, ob die bisherige Messzeit größer als 30 s ist. Ist das nicht der Fall, folgt der Schritt 101, um die Messzeit zu verlängern. Im andernfalls folgenden Schritt 108 werden die bisher bei den Durchläufen des Schritts 101 gesammelten Signalwerte der Vibrationssensoren 48, 50, 54, 56 in Verbindung mit einer Information über die geltende Klasse abgespeichert. Es folgt der Schritt 109, in dem abgefragt wird, ob eine hinreichende Messzeit T, die beispielsweise für jede Klasse mindestens 10 min betragen kann, für die Datenaufnahme vorliegt. Ist das nicht der Fall, folgt wieder der Schritt 101, sonst der Schritt 110, in dem die Signalwerte einer Fourier-Transformation unterzogen werden, d. h. in den Frequenzraum umgesetzt.

Außerdem werden im Schritt 110 die erfassten Schwingungen den einzelnen Komponenten zugeordnet. Diese Zuordnung kann anhand gemessener Drehzahlen (z. B. Drehzahlsensor 58 für den Rotor 39) oder anhand bekannter Lagen der Vibrationsfrequenzen erfolgen. Diese Zuordnung erfolgt für jede Klasse getrennt.

Im nächsten Schritt 112 werden Werte der Komponenten aus den einzelnen Klassen miteinander kombiniert. Dabei können beispielsweise die Amplituden von Grund- und Oberschwingungen und die Lage der Maxima evaluiert werden (s. DE 101 00 522 A, deren Inhalt durch Verweis mit in die vorliegenden Unterlagen aufgenommen wird). Die einzelnen Werte können abhängig von der jeweils gültigen Klasse gewichtet und addiert oder auf andere Weise kombiniert werden. Sie werden schließlich mit einem Sollwert verglichen. Wird der Sollwert um ein bestimmtes Maß überschritten, wird auf der Anzeigeeinrichtung 62 eine Fehlermeldung angezeigt. Die Fouriertransformation in den Frequenzraum ist nur ein Beispiel für eine Analyse der Schwingungssignale, da eine Analyse auch im Zeitraum erfolgen kann (s. DE 103 35 558 B, deren Offenbarung durch Verweis mit in die vorliegenden Unterlagen aufgenommen wird). Der Prozess endet dann im Schritt 114, auf den wieder der Schritt 100 folgen kann.

Im Ergebnis ermöglicht die aus den Vibrationssensoren 48, 50, 52, 54, dem Drehzahlsensor 58 und der Rechnereinrichtung 46 aufgebaute Überwachungseinrichtung eine einfache Überwachung der Arbeitsmaschine 10 auf sich nicht erwartungsgemäß bewegende Elemente und somit eine frühzeitige Erkennung eventueller Fehler.

## Patentansprüche

1. Überwachungseinrichtung zur Überwachung der Funktion der Komponenten einer landwirtschaftlichen Arbeitsmaschine (10), mit:
einem Vibrationssensor (48, 50, 54, 56) zur Bereitstellung von Signalwerten, die eine Information über mechanische Vibrationen enthalten, die von beweglichen Komponenten der Arbeitsmaschine (10) verursacht werden,
einer Betriebszustandserfassungseinrichtung zur Bereitstellung eines Signals, das eine Information über den Betriebszustand von Komponenten der Arbeitsmaschine (10) enthält, und
einer Rechnereinrichtung (46) zur Erzeugung einer Zustandsinformation hinsichtlich des Zustands der Komponenten der Arbeitsmaschine (10), die auf den Signalwerten der Betriebszustandserfassungseinrichtung und des Vibrationssensors (48, 50, 54, 56) basiert,
wobei die Rechnereinrichtung (46) betreibbar ist, die Signalwerte des Vibrationssensors (48, 50, 54, 56) anhand der jeweiligen Signale der Betriebszustandserfassungseinrichtung in verschiedene Klassen einzuteilen, die unterschiedlichen Konstellationen der Betriebszustände von Komponenten bei der Erfassung der Signalwerte entsprechen, und die in die Klassen eingeteilten Signalwerte oder daraus abgeleitete Daten zur Erzeugung der Zustandsinformation mit Vergleichswerten zu vergleichen,
**dadurch gekennzeichnet, dass** die Rechnereinrichtung (46) betreibbar ist, die Signalwerte der Vibrationssensoren (48, 50, 54, 56) nur dann abzuspeichern und zur Erzeugung der Zustandsinformation auszuwerten, wenn die Signale der Betriebszustandserfassungseinrichtung anzeigen, dass die Betriebsbedingungen in eine auswertbare Klasse fallen.

2. Überwachungseinrichtung nach Anspruch 1, **dadurch gekennzeichnet, dass** die Rechnereinrichtung (46) betreibbar ist, die in Klassen eingeteilten Signalwerte zur Erzeugung der Zustandsinformation klassenweise oder klassenübergreifend mit Vergleichswerten zu vergleichen.

3. Überwachungseinrichtung nach Anspruch 1 oder 2, **dadurch gekennzeichnet, dass** die Betriebszustandserfassungseinrichtung eingerichtet ist, zu erkennen, ob eine Komponente der Arbeitsmaschine (10) sich in einem Betriebszustand befindet, und dass die Rechnereinrichtung betreibbar ist, nur für Komponenten eine Zustandsinformation zu erzeugen, für welche die Betriebszustandserfassungseinrichtung einen Betriebszustand signalisiert.

4. Überwachungseinrichtung nach einem der Ansprüche 1 bis 3, **dadurch gekennzeichnet, dass** die Betriebszustandserfassungseinrichtung betreibbar ist, den Betriebszustand einer Komponente aus dem Signal des Vibrationssensors abzuleiten und/oder anhand eines der Komponenten zugeordneten Sensors und/oder eines der Komponenten zugeordneten Eingabeelements zu bestimmen.

5. Überwachungseinrichtung nach einem der Ansprüche 1 bis 4, **dadurch gekennzeichnet, dass** der Rechnereinrichtung (46) Informationen über die Drehzahl bzw. Bewegungsfrequenz mindestens einer beweglichen Komponente der Arbeitsmaschine (10), beispielsweise eines Verbrennungsmotors (64) und/oder einer Erntegutverarbeitungseinrichtung, zugeführt werden, und dass sie betreibbar ist, über eine Messperiode erfasste Signalwerte des Vibrationssensors (48, 50, 54, 56) nur dann zur Auswertung heranzuziehen, wenn die Drehzahl während der gesamten Messperiode innerhalb eines Toleranzbereichs lag.

6. Überwachungseinrichtung nach einem der Ansprüche 1 bis 5, **dadurch gekennzeichnet, dass** die Rechnereinrichtung (46) betreibbar ist, über eine Messperiode erfasste Signalwerte des Vibrationssensors (48, 50, 54, 56) nur dann zur Auswertung heranzuziehen, wenn die Länge einer zusammenhängenden Messperiode oberhalb eines bestimmten Schwellenwertes lag.

7. Überwachungseinrichtung nach einem der Ansprüche 1 bis 6, **dadurch gekennzeichnet, dass** die Rechnereinrichtung (46) betreibbar ist, Komponenten in einen definierten Betriebszustand zu bringen, und/oder einem Bediener eine Anweisung zu geben, Komponenten in einen definierten Betriebszustand zu bringen.

8. Arbeitsmaschine (10) mit einer Überwachungseinrichtung nach einem der vorhergehenden Ansprüche.

9. Verfahren zur Überwachung der Funktion der Komponenten einer landwirtschaftlichen Arbeitsmaschine (10), mit folgenden Schritten:
Bereitstellung von Signalwerten eines Vibrationssensors (48, 50, 54, 56), die eine Information über mechanische Vibrationen enthalten, die von beweglichen Komponenten der Arbeitsmaschine (10) verursacht werden,
Bereitstellung eines Signals einer Betriebszustandserfassungseinrichtung, das eine Information über den Betriebszustand von Komponenten der Arbeitsmaschine (10) enthält, und
Erzeugung einer Zustandsinformation hinsichtlich des Zustands der Komponenten der Arbeitsmaschine (10) mit einer Rechnereinrichtung (46), die auf den Signalwerten der Betriebszustandserfassungseinrichtung und des Vibrationssensors (48, 50, 54, 56) basiert,
wobei die Rechnereinrichtung (46) die Signalwerte des Vibrationssensors (48, 50, 54, 56) anhand der jeweiligen Signale der Betriebszustandserfassungseinrichtung in verschiedene Klassen einteilt, die unterschiedlichen Konstellationen der Betriebszustände von Komponenten bei der Erfassung der Signalwerte entsprechen, und die in die Klassen eingeteilten Signalwerte oder daraus abgeleitete Daten zur Erzeugung der Zustandsinformation mit Vergleichswerten vergleicht,
**dadurch gekennzeichnet, dass** die Rechnereinrichtung (46) die Signalwerte der Vibrationssensoren (48, 50, 54, 56) nur dann abspeichert und zur Erzeugung der Zustandsinformation auswertet, wenn die Signale der Betriebszustandserfassungseinrichtung anzeigen, dass die Betriebsbedingungen in eine auswertbare Klasse fallen.

## Claims

1. Monitoring device for monitoring the operation of the components of an agricultural power take-off machine (10), comprising:
a vibration sensor (48, 50, 54, 56) for providing signal values that contain information on mechanical vibrations caused by moving components of the power take-off machine (10),
an operating-state detection device for providing a signal that contains information on the operating state of components of the power take-off machine (10), and
a processor device (46) for generating an item of state information concerning the state of the components of the power take-off machine (10), said information being based on the signal values from the operating-state detection device and the vibration sensor (48, 50, 54, 56),
where the processor device (46) can be operated so that, on the basis of the respective signals from the operating-state detection device, it classifies the signal values from the vibration sensor (48, 50, 54, 56) into different classes that correspond to different combinations of the operating states of components in the acquisition of signal values, and, to generate the state information, compares with comparative values the signal values classified into classes or data derived therefrom,
**characterized in that** the processor device (46) can be operated so that it only saves the signal values from the vibration sensors (48, 50, 54, 56) and analyzes them to generate the state information when the signals from the operating-state detection device indicate that the operating conditions fall into an analyzable class.

2. Monitoring device according to Claim 1, **characterized in that** the processor device (46) can be operated so that, to generate the state information, it compares with comparative values the signal values classified into classes class-by-class or across classes.

3. Monitoring device according to Claim 1 or 2, **characterized in that** the operating-state detection device is configured to detect whether a component of the power take-off machine (10) is in an operating state, and **in that** the processor device can be operated so that it only generates an item of status information for components for which the operating-state detection device signals an operating state.

4. Monitoring device according to any of Claims 1 to 3, **characterized in that** the operating-state detection device can be operated so that it derives the operating state of a component from the signal from the vibration sensor and/or determines the operating state of a component by means of a sensor assigned to the components and/or an input element assigned to the components.

5. Monitoring device according to any of Claims 1 to 4, **characterized in that** the processor device (46) is supplied with information on the speed or frequency of motion of at least one moving component of the power take-off machine (10), for example an internal combustion engine (64) and/or crop processing equipment, and that it can be operated so that signal values from the vibration sensor (48, 50, 54, 56) detected over a measurement period are only used for analysis when the speed lay within a tolerance band during the entire measurement period.

6. Monitoring device according to any of Claims 1 to 5, **characterized in that** the processor device (46) can be operated so that signal values from the vibration sensor (48, 50, 54, 56) detected over a measurement period are only used for analysis when the length of a continuous measurement period lay above a certain threshold value.

7. Monitoring device according to any of Claims 1 to 6, **characterized in that** the processor device (46) can be operated so that it brings components into a defined operating state, and/or gives an operator an instruction to bring components into a defined operating state.

8. Power take-off machine (10) having a monitoring device according to any of the preceding claims.

9. Method for monitoring the operation of the components of an agricultural power take-off machine (10), comprising the following steps:
providing signal values from a vibration sensor (48, 50, 54, 56) that contain information on mechanical vibrations caused by moving components of the power take-off machine (10),
providing a signal from an operating-state detection device that contains information on the operating state of components of the power take-off machine (10), and
generating an item of state information concerning the state of the components of the power take-off machine (10) having a processor device (46), said information being based on the signal values from the operating-state detection device and the vibration sensor (48, 50, 54, 56),
where the processor device (46), on the basis of the respective signals from the operating-state detection device, classifies the signal values from the vibration sensor (48, 50, 54, 56) into different classes that correspond to different combinations of the operating states of components in the acquisition of signal values, and, to generate the state information, compares with comparative values the signal values classified into classes or data derived therefrom,
**characterized in that** the processor device (46) only saves the signal values from the vibration sensors (48, 50, 54, 56) and analyzes them to generate the state information when the signals from the operating-state detection device indicate that the operating conditions fall into an analyzable class.

## Revendications

1. Dispositif de contrôle pour le contrôle de la fonction des composants d'une machine de travail (10) agricole, comprenant les éléments suivants :
un capteur de vibration (48, 50, 54, 56) pour la mise à disposition de valeurs de signal, qui contiennent une information sur des vibrations mécaniques provoquées par des composants mobiles de la machine de travail (10),
un dispositif de saisie d'état de service pour la mise à disposition d'un signal qui contient une information sur l'état de service de composants de la machine de travail (10), et
un ordinateur (46) pour générer une information d'état concernant l'état des composants de la machine de travail (10), qui est basée sur les valeurs de signal du dispositif de saisie d'état de service et du capteur de vibration (48, 50, 54, 56),
l'ordinateur (46) pouvant être exploité pour subdiviser les valeurs de signal du capteur de vibration (48, 50, 54, 56) à l'aide des signaux respectifs du dispositif de saisie d'état de service en différentes classes, lesquelles correspondent à différents groupements des états de service de composants lors de la saisie des valeurs de signal, et pour comparer les valeurs de signal subdivisées en classes ou des données déduites de ces valeurs pour générer l'information d'état avec des valeurs de comparaison,
**caractérisé en ce que** l'ordinateur (46) peut être exploité pour stocker les valeurs de signal des capteurs de vibration (48, 50, 54, 56) et les analyser pour générer l'information d'état uniquement dans les cas où les signaux du dispositif de saisie d'état de service indiquent que les conditions de service rentrent dans une classe analysable.

2. Dispositif de contrôle selon la revendication 1, **caractérisé en ce que** l'ordinateur (46) peut être exploité pour comparer les valeurs de signal divisées en classes pour générer l'information d'état par classe avec des valeurs de comparaison.

3. Dispositif de contrôle selon la revendication 1 ou 2, **caractérisé en ce que** le dispositif de saisie d'état de service est aménagé pour détecter si un composant de la machine de travail (10) se trouve dans un état de service et **en ce que** l'ordinateur peut être exploité pour générer une information d'état uniquement pour des composants pour lesquels le dispositif de saisie d'état de service signale un état de service.

4. Dispositif de contrôle selon l'une quelconque des revendications 1 à 3, **caractérisé en ce que** le dispositif de saisie d'état de service peut être exploité pour déduire l'état de service d'un composant du signal de capteur de vibration et/ou le déterminer à l'aide d'un capteur attribué au composant et/ou d'un élément d'entrée attribué au composant.

5. Dispositif de contrôle selon l'une quelconque des revendications 1 à 4, **caractérisé en ce que** à l'ordinateur (46) sont amenées des informations sur le régime respectivement la fréquence de déplacement d'au moins un composant mobile de la machine de travail (10), par exemple d'un moteur à combustion (64) et/ou d'un dispositif de traitement du produit récolté, et **en ce qu'**il peut être exploité pour recourir à des valeurs de signal enregistrées sur une période de mesure du capteur de vibration (48, 50, 54, 56) pour l'analyse uniquement dans les cas où le régime se situait pendant l'ensemble de la période de mesure dans les limites d'une plage de tolérances.

6. Dispositif de contrôle selon l'une quelconque des revendications 1 à 5, **caractérisé en ce que** l'ordinateur (46) peut être exploité pour recourir à des valeurs de signal enregistrées sur une période de mesure du capteur de vibration (48, 50, 54, 56) pour l'analyse uniquement dans les cas où la longueur d'une période de mesure cohérente se situait au-dessus d'une valeur seuil définie.

7. Dispositif de contrôle selon l'une quelconque des revendications 1 à 6, **caractérisé en ce que** l'ordinateur (46) peut être exploité pour amener des composants dans un état de service défini et/ou donner une instruction à un opérateur pour amener des composants dans un état de service défini.

8. Machine de travail (10) comprenant un dispositif de contrôle selon l'une quelconque des revendications précédentes.

9. Procédé pour contrôler la fonction des composants d'une machine de travail (10) agricole, comprenant les étapes suivantes :
mise à disposition de valeurs de signal d'un capteur de vibration (48, 50, 54, 56), qui contiennent une information sur des vibrations mécaniques provoquées par des composants mobiles de la machine de travail (10),
mise à disposition d'un signal d'un dispositif de saisie d'état de service, qui donne une information sur l'état de service de composants de la machine de travail (10), et
génération d'une information d'état concernant l'état des composants de la machine de travail (10) avec un ordinateur (46), qui est basée sur les valeurs du signal du dispositif de saisie d'état de service et du capteur de vibration (48, 50, 54, 56),
l'ordinateur (46) divisant les valeurs de signal du capteur de vibration (48, 50, 54, 56) à l'aide des signaux respectifs du dispositif de saisie d'état de service en différentes classes, qui correspondent à différents regroupements des états de service de composants lors de la saisie des valeurs de signal, et qui compare les valeurs de signal divisées en classes ou des données déduites de ces valeurs pour générer l'information d'état avec des valeurs de comparaison,
**caractérisé en ce que** l'ordinateur (46) stocke les valeurs de signal des capteurs de vibration (48, 50, 54, 56) et les analyse pour générer l'information d'état uniquement dans les cas où les signaux du dispositif de saisie d'état de service indiquent que les conditions de service rentrent dans une classe analysable.
